# EUROPEAN PATENT SPECIFICATION

(11) **EP 2 118 590 B1**
(45) Date of publication and mention of the grant of the patent: **04.04.2018**
(21) Application number: 07749784.0
(22) Date of filing: 02.02.2007
(51) Int. Cl.: F25D 29/00, F25D 21/00, F25B 47/02, F25B 5/02

(54) **METHOD FOR OPERATING TRANSPORT REFRIGERATION UNIT WITH REMOTE EVAPORATOR**
VERFAHREN ZUM BETRIEB EINER TRANSPORTKÜHLEINHEIT MIT FERNVERDAMPFER
PROCÉDÉ POUR ACTIONNER UNE UNITÉ DE RÉFRIGÉRATION DE TRANSPORT DOTÉE D'UN ÉVAPORATEUR ÉLOIGNÉ

(43) Date of publication of application: 18.11.2009
(73) Proprietor: Carrier Corporation, Farmington, CT 06434 (US)
(72) Inventor: AWWAD, Nader S., Baldwinsville, NY 13027 (US); MALLINSON, Thomas F., Chittenango, NY 13037 (US)
(74) Representative: Leckey, David Herbert
(86) International application number: PCT/US2007/002853
(87) International publication number: WO 2008/094158

(56) References cited:
- EP-A2- 0 552 906
- GB-A- 2 348 947
- US-A- 5 065 587
- US-A- 5 065 587
- US-A- 5 168 715
- US-A- 5 813 242
- US-B2- 6 996 997

## Description

### Field of the Invention

This invention relates generally to transport refrigeration and, more specifically, to facilitating defrost of the heat exchanger coil of a remote evaporator during the period when product is being loaded into a compartment cargo box of a truck trailer equipped with a refrigeration unit including multiple evaporators.

### Background of the Invention

The refrigerated cargo box of a truck trailer requires a refrigeration unit for maintaining a desired temperature environment within the interior volume of the cargo box. A wide variety of products, ranging for example from freshly picked produce to deep frozen seafood, are commonly shipped in refrigerated truck trailers and other refrigerated freight containers. To facilitate shipment of a variety of products under different temperature conditions, some truck trailer cargo boxes are compartmentalized into two or more separate cargo compartments each of which will typically have a door that opens directly to the exterior of the trailer. The cargo box may be compartmentalized into a pair of side-by-side axially extending compartments, or into two or more back-to-back compartments, or a combination thereof.

Conventional transport refrigeration units used in connection with compartmentalized refrigerated cargo boxes of truck trailers include a refrigerant compressor, a condenser, a main evaporator and one or more remote evaporators connected via appropriate refrigerant lines in a closed refrigerant flow circuit. The refrigeration unit includes a housing mountable to the exterior of the front wall of the cargo box of the truck trailer with the main evaporator disposed on the interior of the front wall such that the air or gas/air mixture or other gas within the interior volume of the forward most container may be circulated over the evaporator coil by means of an evaporator fan associated with the evaporator coil. The refrigeration unit may also be equipped with an economizer incorporated into the refrigerant circuit, if desired. The refrigeration unit must have sufficient refrigeration capacity to maintain the perishable product stored within the various compartments of the cargo box at the particular desired compartment temperatures over a wide range of outdoor ambient temperatures and load conditions.

In addition to the main afore-mentioned evaporator, one or more remote evaporators, typically one for each additional compartment aft of the forward most compartment, are provided to refrigerate the air or other gases within each of the separate aft compartments. The remote evaporators may be mounted to the ceiling of the respective compartments or one of the partition walls of the compartment, as desired. The remote evaporators are generally disposed in the refrigerant circulation circuit in parallel with the main evaporator. Typically, a solenoid operated shut off valve is disposed in the refrigerant circulation circuit upstream of each of the remote in operation with a system controller so that each remote evaporator may to independently and selectively open and closed to refrigerant flow in response to the cooling demand of the respective compartment with which the respective remote evaporator is operatively associated. For example, U.S. Patent No. 5,065,587 discloses a refrigeration system for a compartmentalized truck trailer having a forward compartment and a rear remote compartment, and describes the features of the preamble of claim 1.

Product to be shipped is loaded into the cargo box of the truck trailer through one or more doors. In a compartmentalized cargo box, each of the respective cargo compartments generally has one or more associated doors through which product may be loaded directly into the various compartments from externally of the truck trailer. When loading product into a compartment of the truck trailer, it is customary to leave the door or doors to the compartment open to facilitate the loading operation. With the door or doors open, relatively warmer moisture bearing ambient air from externally of the truck trailer may enter the compartment, such as, for example, when fresh fruits and vegetables are loaded direct from the field. Simultaneously, relatively colder refrigerated air may pass out of the compartment. Additionally, when product is loaded into the container "hot", that is at a temperature above the desired product storage temperature, such as for example directly from the field at ambient outdoor temperature, a substantial refrigeration load is imposed upon the transport refrigeration unit in pulling the temperature of the newly loaded product down from ambient outdoor temperature to the desired product storage temperature. The net effect being to raise the temperature of and to add moisture to the air resident within the compartment, particularly in regions with warm and humid ambient conditions.

In the compartmentalized transport refrigeration system disclosed in the aforementioned U.S. Patent No. 5,065,587, the remote evaporator is automatically shut down whenever the door to the rear compartment is open. However, many operators prefer to run the transport refrigeration unit during the product loading operation to counter the impact of the infiltration of relatively warmer ambient air and the added heat load associated with the product, and to reduce the time required to pull down the cargo box when the loading operation has been completed. As a result of the increased moisture within the interior volume of the compartment or compartments being loaded, frost will build-up on the evaporator heat exchanger coil disposed within the compartment or compartments being loaded and will do so more quickly than under normal steady-state operating conditions. As frost builds up on the evaporator heat exchanger coil, the cooling capacity and the pull down of the refrigeration unit decreases and air flow through the affected evaporator decreases.

During the product loading process, it is conventional practice for the operator to manually initiate an evaporator coil defrost cycle whenever the operator deems appropriate. However, some operators may forget to manually initiate the defrost cycle until the evaporator heat exchanger coil has become excessively burdened with frost build up and the refrigeration capacity and performance of the evaporator heat exchanger coil has substantially deteriorated. Accordingly, it would be desirable to provide a transport refrigeration unit wherein a defrost cycle is automatically initiated during the product loading procedure whenever the refrigeration performance of the refrigeration unit has deteriorated below an acceptable level.

EP-A-0552906 discloses a method of starting defrost in a refrigerant system, and US5813242 describes a defrost control system including a superheat detector used for initiating the defrost.

### Summary of the Invention

The operation of a transport refrigeration unit is controlled during loading of product into a cargo compartment equipped with a remote evaporator to automatically defrost the remote evaporator when a selected parameter indicative of the performance of the refrigeration unit has transgressed a limit threshold indicative of deteriorating performance.

In accordance with the invention, there is provided a method for operating a transport refrigeration unit during loading of product into a cargo box, as set forth in claim 1.

In an embodiment, the step of determining a degree of superheat (CSS) in the refrigerant at the suction inlet to the compressor comprises the steps of sensing a refrigerant temperature (CST) indicative of the refrigerant temperature at the suction inlet to the compressor, sensing a refrigerant pressure (CSP) indicative of the refrigerant pressure at the suction inlet to the compressor, determining a suction saturation temperature (SST) based upon the sensed refrigerant pressure (CSP) indicative of the refrigerant pressure at the suction inlet to the compressor, and subtracting the suction saturation temperature (SST) from the sensed refrigerant temperature (CST) indicative of the refrigerant temperature at the suction inlet to the compressor.

In an embodiment, the step of initiating the defrost of an evaporator comprises initiating an electric defrost of the evaporator. In an embodiment, the step of initiating the defrost of an evaporator comprises initiating an electric defrost of the evaporator or a predetermined time period.

### Brief Description of the Drawings

For a further understanding of the invention, reference will be made to the following detailed description of the invention which is to be read in connection with the accompanying drawing, where:
FIG. 1 is a perspective view, partly in section, of a refrigerated truck trailer having a compartmentalized cargo box and equipped with a transport refrigeration unit having multiple evaporators;
FIG. 2 is a schematic representation of an exemplary embodiment of the multiple evaporator transport refrigeration unit of the invention;
FIG. 3 is a block diagram illustrating an exemplary embodiment of the method for operation of the transport refrigeration unit of FIG. 2 during loading of the refrigerated perishable product container of FIG. 1; and
FIG. 4 is a block diagram illustrating an exemplary embodiment of the step of initiating a defrost mode during loading of the refrigerated perishable product container of FIG. 1.

### Detailed Description of the Invention

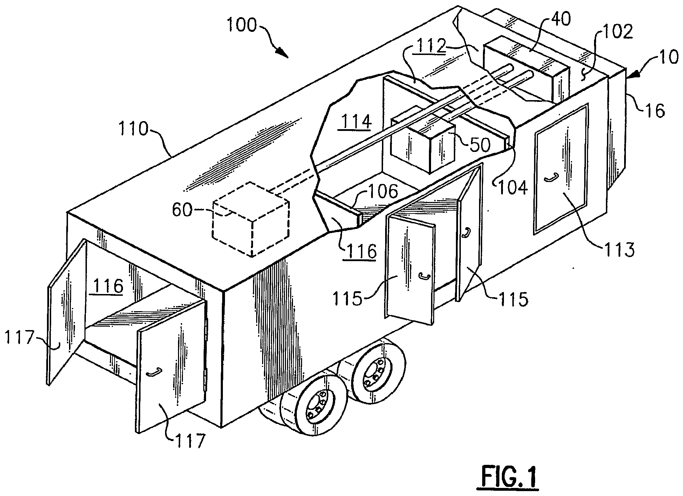

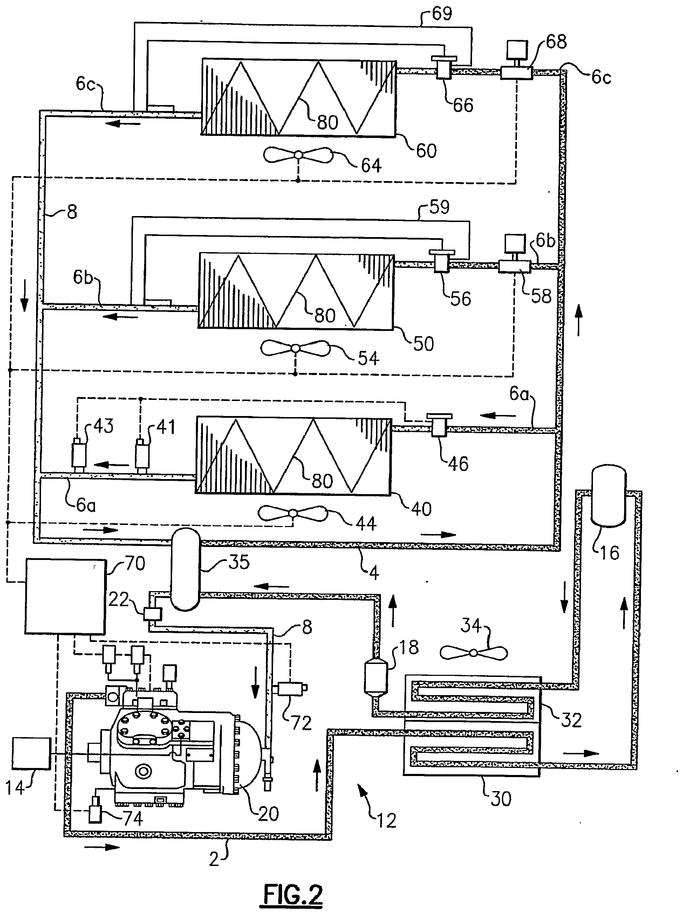

Referring now to FIGs. 1 and 2, there is shown a truck trailer 100 having a refrigerated cargo box 110 subdivided, i.e. compartmentalized, by internal partition walls 104, 106 into a forward cargo compartment 112, a central cargo compartment 114 and an aft cargo compartment 116. The cargo compartments 112, 114 and 116 have access doors 113, 115 and 117, respectively, which open directly to the exterior of the truck trailer to facilitate loading of product into the respective cargo compartments 112, 114 and 116. The truck trailer 100 is equipped with a transport refrigeration system 10 for regulating and maintaining within each of the respective cargo compartments 112, 114 and 116 a desired storage temperature range selected for the perishable product being shipped therein. Although the invention will be described herein with reference to the three compartment, refrigerated cargo box, illustrated in Fig. 1, it is to be understood that the invention may also be used in connection with truck trailers having compartmentalized cargo boxes with the cargo compartments arranged otherwise, and also in connection with other refrigerated transport vessels, including for example refrigerated box of a truck, or a refrigerated freight container of compartmentalized design for transporting perishable product by ship, rail and/or road transport.

The transport refrigeration system 10 includes a refrigeration unit 12 and a power source 14. The refrigeration unit 12 includes compressor 20, a condenser 30 and associated condenser fan(s) 34, a main evaporator 40 and associated evaporator fan(s) 44, remote evaporators 50 and 60 and associated fans 54 and 64, respectively, and evaporator expansion devices 46, 56 and 66 arranged in a conventional refrigeration cycle and connected in a refrigerant circulation circuit including refrigerant lines 2, 4, 6a, 6b, 6c and 8. Each of the evaporators 40, 50 and 60 may comprise a conventional finned tube coil heat exchanger. The transport refrigeration system 10 is mounted as in conventional practice to an exterior wall of the truck trailer 100, for example the front wall 102 thereof, with the compressor 20 and the condenser 30 its associated condenser fan(s) 34 disposed externally of the refrigerated cargo box 110 in a housing 16.

The main evaporator 40 is disposed on the wall 102 of the forward compartment 112 of the refrigerated cargo box 110. The expansion device 46, which as in the depicted embodiment may be an electronic expansion valve, is disposed in refrigerant line 6a upstream with respect to refrigerant flow of the main evaporator 40 for metering the flow of refrigerant through the evaporator in response to the degree of superheat in the refrigerant at the outlet of the evaporator 40, as in conventional practice. A temperature sensor 41 and a pressure sensor 43 are mounted on the refrigerant line 6a closely downstream of the outlet of the evaporator 40 for monitoring the temperature and pressure of the refrigerant at the evaporator outlet. The electronic expansion valve 46 receives signals indicative of the evaporator outlet temperature and pressure from the sensors 41 and 43, respectively, and determines therefrom the degree of superheat in the refrigerant at the evaporator outlet as in conventional practice.

The remote evaporator 50 is disposed on the partition wall 104 of the refrigerated cargo box 110 within the central compartment 114. A solenoid operated flow shut-off valve 58 is disposed in refrigerant line 6b upstream with respect to refrigerant flow of the expansion valve 56, which, as in the depicted exemplary embodiment, may be a thermostatic static expansion valve operatively associated with an evaporator outlet temperature sensing element 57, for example a temperature sensing bulb, mounted on refrigerant line 6b downstream with respect to refrigerant flow of the evaporator 50 for sensing the refrigerant temperature at the evaporator outlet which reflects the degree of superheat of the refrigerant at the evaporator outlet. As in conventional practice, the expansion valve 56 meters the flow of refrigerant through the remote evaporator 50. An external equalizer line 59 may also be provided in association with the expansion valve 56.

The remote evaporator 60 is disposed on the ceiling of the cargo box 110 within the aft compartment 116. A solenoid operated flow shut-off valve 68 is disposed in refrigerant line 6c upstream with respect to refrigerant flow of the expansion valve 66, which, as in the depicted exemplary embodiment, may be a thermostatic static expansion valve operatively associated with an evaporator outlet temperature sensing element 67, for example a temperature sensing bulb, mounted on refrigerant line 6c downstream with respect to refrigerant flow of the evaporator 60 for sensing the refrigerant temperature at the evaporator outlet which reflects the degree of superheat of the refrigerant at the evaporator outlet. As in conventional practice, the expansion valve 66 meters the flow of refrigerant through the remote evaporator 60. An external equalizer line 69 may also be provided in association with the expansion valve 66.

As in conventional practice, when the refrigeration unit 10 is in operation, low temperature, low pressure refrigerant vapor is compressed by the compressor 20 to a high pressure, high temperature refrigerant vapor and passed from the discharge outlet of the compressor 20 into refrigerant line 2. The refrigerant circulates through the refrigerant circuit via refrigerant line 2 to and through the heat exchanger coil of the condenser 30, wherein the refrigerant vapor condenses to a liquid, and the subcooler 32, thence through refrigerant line 4 through the refrigerant-to-refrigerant heat exchanger 35, thence through refrigerant line 6a through the main evaporator 40, and through refrigerant lines 6b and 6c and the remote respective evaporator 50 and 60, if the associated solenoid operated flow shut-off valves 58 and 68 are open. The refrigerant evaporates as it passes through the evaporators in heat exchange relationship the air within the respective cargo compartments. The refrigerant vapor leaving the evaporators thence passes through refrigerant line 8 through the refrigerant-to-refrigerant heat exchanger 35 and the suction modulation valve 22 to return to the suction inlet of the compressor 20. In the refrigerant-to-refrigerant heat exchanger 35, the hot, high pressure liquid refrigerant passing through refrigerant line 4 passes in heat exchange relationship with the lower temperature, lower pressure vapor refrigerant passing through refrigerant line 8. In addition, a receiver 16 and a filter/drier 18 may be included in the refrigerant circuit as in conventional practice. An economizer circuit (not shown) incorporated into the refrigerant circuit in a conventional manner well known in the art.

The compressor 20 may comprise a single-stage or multiple-stage compressor such as, for example, a reciprocating compressor or a scroll compressor, although the particular type of compressor used is not germane to or limiting of the invention. In the exemplary embodiment depicted in Fig. 2, the compressor is a reciprocating compressor, such as for example, an 06D model reciprocating compressor manufactured by Carrier Corporation or a variant thereof, having a compressing mechanism, an internal electric compressor motor and an interconnecting drive shaft that are all sealed within a common housing of the compressor 20. The power source 14 fully powers the internal electric motor of the compressor. In an embodiment, the power source 14 generates sufficient electrical power for fully driving the electrical motor of the compressor 20 and also for providing all other electrical power required by the fans 34, 44, 54, 64 and other parts of the refrigeration system 10. In an electrically powered embodiment of the transport refrigeration system 10, the power source 14 comprises a single on-board engine driven synchronous generator configured to selectively produce at least one AC voltage at one or more frequencies. An electrically powered transport refrigeration system suitable for use on truck trailer transport vehicles are shown in U.S. Pat. No. 6,223,546, assigned to the assignee of the present application, the entire disclosure of which is incorporated herein by reference.

The refrigeration unit also includes an electronic controller 70 that is configured to operate the refrigeration unit 10 to maintain a predetermined thermal environment within the compartments 112, 114 and 116 defined within the cargo box 110 wherein the product is stored during transport. The electronic controller 70 maintains the predetermined environment by selectively powering and controlling the operation of the compressor 20, the condenser fan(s) 34 associated with the condenser 30, the evaporator fans 44, 54 and 64 associated with the evaporators 40, 50 and 60, respectively, and the suction modulation valve 12. When cooling of the environment within the compartments 112, 114 and 116 of the cargo box 110 is required, the electronic controller 70 activates the compressor 20, the condenser fan(s) 34 and the evaporator fan 44, 54 and 64, as appropriate. Additionally, the electronic controller 70 adjusts the position of the suction modulation valve 12 to increase or decrease the flow of refrigerant supplied to the compressor 20 as appropriate to control and stabilize the temperatures within the respective compartments 112, 114 and 116 within the cargo box at the respective set point temperatures, which correspond to the desired product storage temperatures for the particular products stored within the respective compartments 112, 114 and 116 of the cargo box 110. A more detailed discussion of the operation of the transport refrigeration unit 100 under normal steady-state load is provided in the aforementioned U.S. Patent 6,223,546.

In one embodiment, the electronic controller 70 includes a microprocessor and an associated memory. The memory of the controller 70 may be programmed to contain preselected operator or owner desired values for various operating parameters within the system, including, but not limited to, temperature set points for various locations within the refrigerant circuit and/or the compartments 112, 114 and 116 of the cargo box 110, pressure limits, current limits, engine speed limits, and any variety of other desired operating parameters or limits within the system. The programming of the controller is within the ordinary skill in the art. The controller 70 may include a microprocessor board that includes the microprocessor, an associated memory, and an input/output board that contains an analog-to-digital converter which receives temperature inputs and pressure inputs from a plurality of sensors located at various points throughout the refrigerant circuit and the refrigerated cargo box, current inputs, voltage inputs, and humidity levels. The input/output board may also include drive circuits or field effect transistors and relays which receive signals or current from the controller 70 and in turn control various external or peripheral devices associated with the transport refrigeration system. In an embodiment, the controller 70 may comprise the MicroLink™ controller available from Carrier Corporation, the assignee of this application. However, the particular type and design of the controller 70 is within the discretion of one of ordinary skill in the art to select and is not limiting of the invention.

When the refrigeration unit system 10 is in operation, air within the forward compartment 112 of the refrigerated cargo box 110 is circulated by the evaporator fan(s) 44 through the evaporator 40 and back into the interior volume of the refrigerated forward compartment 112 of the cargo box 110. Additionally, if the solenoid operated flow shut-off valve 58 is open, air within the central compartment 114 of the refrigerated cargo box 110 is circulated by the evaporator fan(s) 54 through the evaporator 50 and back into the interior volume of the refrigerated forward compartment 114 of the cargo box 110. If the solenoid operated flow shut-off valve 68 is open, air within the aft compartment 116 of the refrigerated cargo box 110 is circulated by the evaporator fan(s) 64 through the evaporator 60 and back into the interior volume of the refrigerated aft compartment 116 of the cargo box 110. As in conventional practice, the air passing through the evaporators 40, 50 and 60 is cooled as it passes in heat exchange relationship with refrigerant circulated through the tubes of the finned heat transfer coils of the respective evaporators 40, 50 and 60.

Perishable product is loaded into the compartments 112, 114, 116 of the refrigerated cargo box 110 of the trailer 100 through the doors 113, 115, 117, respectively. When loading product, it is customary to leave the doors open to facilitate the loading operation. With the doors open, relatively warmer moisture bearing ambient air from externally of the cargo box 110 may enter into any of the compartments 112, 114 and 116 whose respective door or doors are open. Relatively colder refrigerated air may simultaneously pass out of the interior volume of any compartment whose doors or doors are open. The net effect being to raise the temperature of and add moisture to the air resident within the interior volume of those open compartments, particularly in regions with warm and humid ambient conditions.

Consequently, many operators choose to run the transport refrigeration system 10 during the product loading operation to counter the impact of the infiltration of relatively warmer ambient air and to reduce the time required to pull down the temperature of the interior volume of the compartment(s) and the temperature of the freshly added product within the compartment(s) when the loading operation has been completed. As a result of the increased moisture within the interior volume the compartments of the cargo box 110 being loaded, frost will build-up on the finned tube heat exchanger coil of the main evaporator 40 if compartment 112 is being loaded and the finned tube heat exchanger coils of the remote evaporators 50 and 60 if the compartments 114 and 116, respectively, are being loaded, and will do so more quickly than under normal steady-state operating conditions. As frost builds up on the heat exchanger coils of the respective evaporators, the cooling capacity and the pull down capability of the refrigeration unit 12 decreases and air flow through the affected evaporator decreases.

The controller 70 is configured to determine the degree of superheat in the refrigerant passing through refrigerant line 8 that connects the respective refrigerant lines 6a, 6b and 6c downstream of the respective outlets of the heat exchanger coils of the evaporators 40, 50 and 60 in refrigerant flow communication with the suction inlet of the compressor 20. The controller 70 compares the determined degrees of superheat, commonly referred to as suction superheat (SSV), to a low suction superheat threshold (LSS). If the determined suction superheat (SSV) is less than the low suction superheat threshold (LSS) during the loading operation, the controller 60 will interrupt operation of the refrigeration unit 12 in the refrigeration mode and initiate an electric defrost cycle to clear the heat exchanger coil of the affected evaporator or evaporators of the evaporators 40, 50 and 60 of the frost built-up thereon.

In an embodiment, the controller 70 uses the refrigerant suction temperature and the refrigerant suction pressure to calculate the degree of superheat at the suction inlet. A temperature sensor 72 operatively associated with refrigerant line 8 monitors the temperature of the refrigerant upstream of the suction inlet (CST) of the compressor 20 and a pressure sensor 74 operatively associated with the compressor 20 monitors the pressure of the refrigerant at the suction inlet (CSP) of the compressor 20. In the exemplary embodiment depicted in Fig. 2, the temperature sensor 72 comprises a thermocouple, thermistor or other conventional thermostatic device mounted on the refrigerant line 8 at a location downstream with respect to refrigerant flow of the suction modulation valve. In the exemplary embodiment depicted in Figure 2, the pressure sensor 74 comprises a conventional pressure transducer mounted in operative association with the suction inlet side of the compression chamber of the compressor 20 to sense the pressure of the refrigerant vapor at the suction inlet.

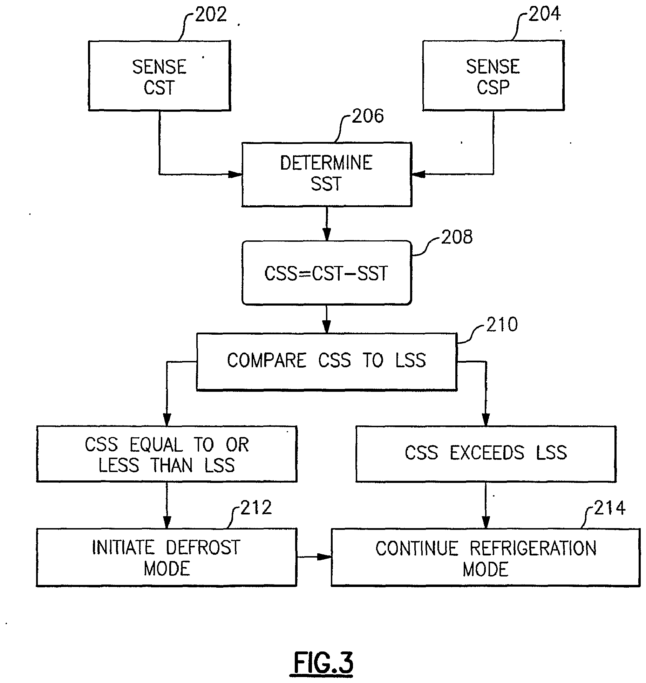

The defrost control mode of the controller 70 during the period in which the transport refrigeration system 10 is running while product is being loaded into the cargo box 110 is presented schematically in block diagram of Fig. 3. At block 202, the temperature sensor 72 detects the compressor suction temperature (CST) and transmits a signal indicative of the CST to the input/output module of the controller 70. At block 204, the pressure sensor 74 detects the compressor suction pressure (CSP) and transmits a signal indicative of the CSP to the input/output board of the controller 70. The analog input signals received from the sensors 72 and 74 are converted to digital signals by means of an analog-to-digital converter associated with the input/outlet module. If the sensors 72 and 74 are of a type that generate and transmit digital signals, rather than analog signals, this conversion is not needed.

The controller 70 uses the sensed CST and CSP to determine the degrees of superheat in the refrigerant at the suction inlet (CSS) at the current operating conditions of the transport refrigerant unit 12. In an embodiment, at block 206, the controller 70 determines the degree of superheat through reference to a look-up table of suction saturated temperature (SST) versus saturated pressure (equal to CSP) for the refrigerant with which the refrigerant unit 12 is charged and then, at block 208, subtracts that suction saturated temperature (SST) from the sensed compressor suction temperature (CST) to determine the degrees of superheat (CSS) at the suction inlet of the compressor.

Having determined the actual degrees of superheat of the refrigerant at the suction inlet (CSS) at the compressor suction inlet, at block 210, the controller 70 compares the CSS to a threshold valve representative of the permissible lower limit for the degrees of superheat of the refrigerant at the suction inlet (LSS) to the compressor 20 and indicative of unacceptable frost build-up on one or more of the respective heat exchanger coils of the main evaporator 40 and the remote evaporators 50 and 60.

If the actual degrees of superheat of the refrigerant at the suction inlet (CSS) is equal to or less than the permissible lower limit for the degrees of superheat of the refrigerant at the suction inlet (LSS), the controller 70, at block 212, interrupts the operation of the refrigeration unit 12 in the refrigeration mode and activates the electric defrost elements 80 and deactivates fan or fans 44, 54 and 64, as appropriate, to initiate an electric defrost of the frosted heat exchanger coils of the respective evaporators 40, 50 and 60. After a preprogrammed time delay following initiation of the electric defrost cycle, the extent of which is within the ordinary skill in the art to select for the particular evaporator heat exchanger coils in use, the, controller 70 will deactivate the electric defrost elements 80 to terminate the electric defrost cycle and reactivate fan or fans 44, 54 and 64, as appropriate, to return the transport refrigeration unit 12 to operation in the refrigeration mode, at block 214. If, however, the actual degree of superheat of the refrigerant at the suction inlet (CSS) is greater than the permissible lower limit for the degrees of superheat of the refrigerant at the suction inlet (LSS), the controller 70 continues operation of the refrigeration unit 12 in the refrigeration mode.

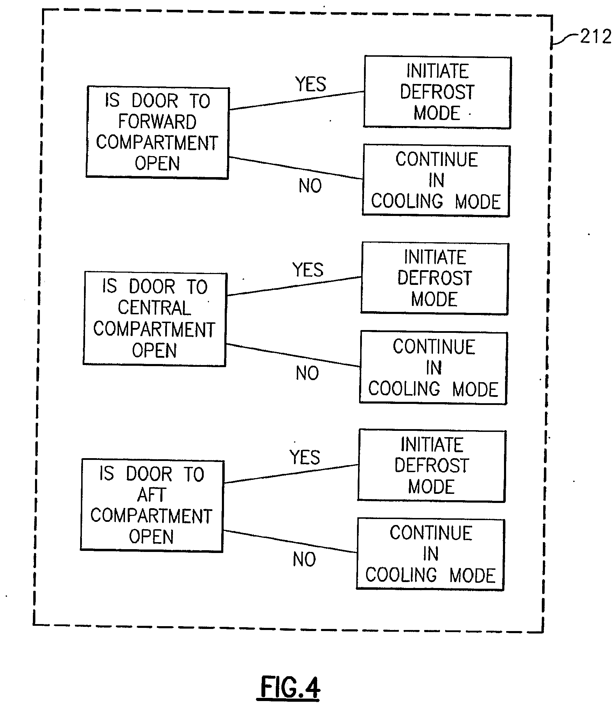

The comprises step of initiating the defrost mode may comprises initiating a defrost of the main evaporator if product is being loaded into the first compartment and/or initiating a defrost of the remote evaporator if product is being loaded into the second compartment. Referring now to FIG. 4, the controller 70 will carry out step 212 by first determining which of the doors 113, 115 and 117, associated respectively with compartments 112, 114 and 116 and then initiating a defrost cycle of the main evaporator 40 if, and only if, the door 113 to the forward compartment 112 is open, initiating a defrost of the remote evaporator 50 if, and only if, the door 115 to the central compartment 114 is open, and initiating a defrost of the remote evaporator 60 if, and only if, the door 117 to the aft compartment 116 is open. To facilitate the determination of which of the compartment doors is open during loading of product, a door sensor (not shown) may be installed, as in conventional practice, in operative association with each of the compartment doors to sense whether its associated door is open or closed and transmit a signal to the controller 70 indicating when that the door is open.

While the present invention has been particularly shown and described with reference to the preferred mode as illustrated in the drawing, it will be understood by one skilled in the art that various changes in detail may be effected therein without departing from the scope of the invention as defined by the claims.

## Claims

1. A method for operating a transport refrigeration unit (10) during loading of product into a compartmentalized cargo box (110), the cargo box (110) having at least a first compartment (112) having a door (113) and a second compartment (114) having a door (115), the refrigeration unit (10) having a refrigerant flow circuit including a refrigerant compressor (20) having a suction inlet, a main evaporator (40) operatively associated with the first compartment (112) and a remote evaporator (50) operative associated with the second compartment (114), connected in refrigerant flow communication in a refrigeration circuit, said method **characterised by** comprising the steps of:
determining a degree of superheat (CSS) in the refrigerant at the suction inlet to the compressor (20);
comparing said degree of suction superheat (CSS) to a lower limit for the degree of superheat (LSS) at the suction inlet to the compressor (20);
continuing operation of said refrigerant unit (10) in a refrigeration mode if said degree of suction superheat (CSS) is greater than said lower limit for the degree of superheat (LSS); and
terminating operation of said refrigerant unit (10) in the refrigeration mode if said degree of suction superheat (CSS) is not greater than said lower limit for the degree of superheat (LSS) and initiating a defrost of at least one of the main and remote evaporators (40, 50),
wherein the step of initiating a defrost of at least one of said evaporators (40, 50) comprises at least one of:
determining whether the door (115) to the second compartment (114) is open and initiating a defrost of said remote evaporator (50) if the door (115) to the second compartment (114) is determined to be open; and
determining whether the door (113) to the first compartment (112) is open and initiating a defrost of said main evaporator (40) if the door (113) to the first compartment (112) is determined to be open.

2. A method as recited in claim 1 wherein the step of determining a degree of superheat (CSS) in the refrigerant at the suction inlet to the compressor (20) comprises the steps of:
sensing a refrigerant temperature (CST) indicative of the refrigerant temperature at the suction inlet to the compressor (20);
sensing a refrigerant pressure (CSP) indicative of the refrigerant pressure at the suction inlet to the compressor (20);
determining a suction saturation temperature (SST) based upon the sensed refrigerant pressure (CSP) indicative of the refrigerant pressure at the suction inlet to the compressor (20); and
subtracting the suction saturation temperature (SST) from the sensed refrigerant temperature (CST) indicative of the refrigerant temperature at the suction inlet to the compressor (20).

3. A method as recited in claim 1 wherein the step of initiating a defrost of at least one of said evaporators (40, 50) comprises initiating a defrost of said remote evaporator (50).

4. A method as recited in claim 1 wherein the step of initiating a defrost of at least one of said evaporators comprises initiating a defrost of said main evaporator (40) if product is being loaded into the first compartment (112) and initiating a defrost of said remote evaporator (50) if product is being loaded into said second compartment (114).

5. A method as recited in claim 1 wherein the step of initiating a defrost of at least one of said evaporators (40, 50) comprises initiating an electric defrost of at least one of said evaporators (40, 50).

6. A method as recited in claim 1 wherein the step of initiating a defrost of at least one of said evaporators (40, 50) comprises initiating an electric defrost of at least one of said evaporators (40, 50) for a predetermined time period.

7. A method as recited in any preceding claim wherein said cargo box (110) is of a truck trailer.

## Patentansprüche

1. Verfahren zum Betreiben einer Transportkühleinheit (10) während des Ladens von Ware in einen unterteilten Ladebehälter (110), wobei der Ladebehälter (110) mindestens eine erste Kammer (112), die eine Tür (113) aufweist, und eine zweite Kammer (114), die eine Tür (115) aufweist, aufweist, wobei die Kühl-einheit (10) einen Kältemittelstromkreislauf aufweist, der einen Kältemittelverdichter (20), der einen Ansaugeinlass aufweist, einen Hauptverdampfer (40), der operativ der ersten Kammer (112) zugeordnet ist, und einen Fernverdampfer (50), der operativ der zweiten Kammer (114) zugeordnet ist, beinhaltet, die in Kältemittelstromkommunikation in einem Kältemittelkreislauf verbunden sind, wobei das Verfahren durch das Umfassen der folgenden Schritte gekennzeichnet ist:
Ermitteln eines Grads der Überhitzungswärme (CSS) im Kältemittel am Ansaugeinlass zum Verdichter (20);
Vergleichen des Grads der Ansaugüberhitzungswärme (CSS) mit einer Untergrenze für den Grad der Überhitzungswärme (LSS) am Ansaugeinlass zum Verdichter (20);
Fortsetzen des Betreibens der Kühleinheit (10) in einem Kühlmodus, wenn der Grad der Ansaugüberhitzungswärme (CSS) über der Untergrenze für den Grad der Überhitzungswärme (LSS) liegt; und
Beenden des Betreibens der Kühleinheit (10) im Kühlmodus, wenn der Grad der Ansaugüberhitzungswärme (CSS) nicht über der Untergrenze für den Grad der Überhitzungswärme (LSS) liegt, und Einleiten eines Abtauvorgangs von zumindest einem des Haupt- und des Fernverdampfers (40, 50),
wobei der Schritt des Einleitens eines Abtauvorgangs von zumindest einem der Verdampfer (40, 50) zumindest eines der Folgenden umfasst:
Ermitteln, ob die Tür (115) zur zweiten Kammer (114) geöffnet ist, und Einleiten eines Abtauvorgangs des Fernverdampfers (50), wenn ermittelt wird, dass die Tür (115) zur zweiten Kammer (114) geöffnet ist; und
Ermitteln, ob die Tür (113) zur ersten Kammer (112) geöffnet ist, und Einleiten eines Abtauvorgangs des Hauptverdampfers (40), wenn ermittelt wird, dass die Tür (113) zur ersten Kammer (112) geöffnet ist.

2. Verfahren nach Anspruch 1, wobei der Schritt des Ermittelns eines Grads der Überhitzungswärme (CSS) im Kältemittel am Ansaugeinlass zum Verdichter (20) die folgenden Schritte umfasst:
Erfassen einer Kältemitteltemperatur (CST), welche die Kältemitteltemperatur am Ansaugeinlass zum Verdichter (20) angibt;
Erfassen eines Kältemitteldrucks (CSP), der den Kältemitteldruck am Ansaugeinlass zum Verdichter (20) angibt;
Ermitteln einer Ansaugsättigungstemperatur (SST) auf Grundlage des erfassten Kältemitteldrucks (CSP), der den Kältemitteldruck am Ansaugeinlass zum Verdichter (20) angibt; und
Subtrahieren der Ansaugsättigungstemperatur (SST) von der erfassten Kältemitteltemperatur (CST), welche die Kältemitteltemperatur am Ansaugeinlass zum Verdichter (20) angibt.

3. Verfahren nach Anspruch 1, wobei der Schritt des Einleitens eines Abtauvorgangs von mindestens einem der Verdampfer (40, 50) das Einleiten eines Abtauvorgangs des Fernverdampfers (50) umfasst.

4. Verfahren nach Anspruch 1, wobei der Schritt des Einleitens eines Abtauvorgangs von mindestens einem der Verdampfer das Einleiten eines Abtauvorgangs des Hauptverdampfers (40), wenn Ware in die erste Kammer (112) geladen wird, und das Einleiten eines Abtauvorgangs des Fernverdampfers (50), wenn Ware in die zweite Kammer (114) geladen wird, umfasst.

5. Verfahren nach Anspruch 1, wobei der Schritt des Einleitens eines Abtauvorgangs von mindestens einem der Verdampfer (40, 50) das Einleiten eines elektrischen Abtauvorgangs von mindestens einem der Verdampfer (40, 50) umfasst.

6. Verfahren nach Anspruch 1, wobei der Schritt des Einleitens eines Abtauvorgangs von mindestens einem der Verdampfer (40, 50) das Einleiten eines elektrischen Abtauvorgangs von mindestens einem der Verdampfer (40, 50) über einen vorher festgelegten Zeitraum hinweg umfasst.

7. Verfahren nach einem der vorhergehenden Ansprüche, wobei der Ladebehälter (110) zu einem Lastzug gehört.

## Revendications

1. Procédé pour actionner une unité de réfrigération de transport (10) pendant le chargement de produit dans une caisse de chargement compartimentée (110), la caisse de chargement (110) présentant au moins un premier compartiment (112) présentant une porte (113) et un second compartiment (114) présentant une porte (115), l'unité de réfrigération (10) présentant un circuit de flux de réfrigérant incluant un compresseur de réfrigérant (20) présentant une entrée d'aspiration, un évaporateur principal (40) associé en fonctionnement au premier compartiment (112) et un évaporateur éloigné (50) associé en fonctionnement au second compartiment (114), raccordé en communication de flux de réfrigérant dans un circuit de réfrigération, ledit procédé étant **caractérisé en ce qu'**il comprend les étapes de :
détermination d'un degré de surchauffe (CSS) dans le réfrigérant sur l'entrée d'aspiration menant au compresseur (20) ;
comparaison dudit degré de surchauffe d'aspiration (CSS) avec une limite inférieure pour le degré de surchauffe (LSS) sur l'entrée d'aspiration menant au compresseur (20) ;
poursuite de l'actionnement de ladite unité de réfrigérant (10) dans un mode de réfrigération si ledit degré de surchauffe d'aspiration (CSS) est supérieur à ladite limite inférieure pour le degré de surchauffe (LSS) ; et
fin de l'actionnement de ladite unité de réfrigérant (10) dans le mode de réfrigération si ledit degré de surchauffe d'aspiration (CSS) n'est pas supérieur à ladite limite inférieure pour le degré de surchauffe (LSS) et initiation d'un dégivrage d'au moins un des évaporateurs principal et éloigné (40, 50),
dans lequel l'étape d'initiation d'un dégivrage d'au moins un desdits évaporateurs (40, 50) comprend au moins une détermination parmi :
la détermination de l'ouverture de la porte (115) menant au second compartiment (114) et l'initiation d'un dégivrage dudit évaporateur éloigné (50) si la porte (115) menant au second compartiment (114) est déterminée comme étant ouverte ; et
la détermination de l'ouverture de la porte (113) menant au premier compartiment (112) et l'initiation d'un dégivrage dudit évaporateur principal (40) si la porte (113) menant au premier compartiment (112) est déterminée comme étant ouverte.

2. Procédé selon la revendication 1, dans lequel l'étape de détermination d'un degré de surchauffe (CSS) dans le réfrigérant sur l'entrée d'aspiration menant au compresseur (20) comprend les étapes de :
détection d'une température de réfrigérant (CST) indiquant la température de réfrigérant sur l'entrée d'aspiration menant au compresseur (20) ;
détection d'une pression de réfrigérant (CSP) indiquant la pression de réfrigérant sur l'entrée d'aspiration menant au compresseur (20) ;
détermination d'une température de saturation d'aspiration (SST) sur la base de la pression de réfrigérant détectée (CSP) indiquant la pression de réfrigérant sur l'entrée d'aspiration menant au compresseur (20) ; et
soustraction de la température de saturation d'aspiration (SST) de la température de réfrigérant détectée (CST) indiquant la température de réfrigérant sur l'entrée d'aspiration menant au compresseur (20).

3. Procédé selon la revendication 1, dans lequel l'étape d'initiation d'un dégivrage d'au moins un desdits évaporateurs (40, 50) comprend l'initiation d'un dégivrage dudit évaporateur éloigné (50).

4. Procédé selon la revendication 1, dans lequel l'étape d'initiation d'un dégivrage d'au moins un desdits évaporateurs comprend l'initiation d'un dégivrage dudit évaporateur principal (40) si le produit est en cours de chargement dans le premier compartiment (112) et l'initiation d'un dégivrage dudit évaporateur éloigné (50) si le produit est en cours de chargement dans ledit second compartiment (114).

5. Procédé selon la revendication 1, dans lequel l'étape d'initiation d'un dégivrage d'au moins un desdits évaporateurs (40, 50) comprend l'initiation d'un dégivrage électrique d'au moins un desdits évaporateurs (40, 50).

6. Procédé selon la revendication 1, dans lequel l'étape d'initiation d'un dégivrage d'au moins un desdits évaporateurs (40, 50) comprend l'initiation d'un dégivrage électrique d'au moins un desdits évaporateurs (40, 50) pour une période de temps prédéterminée.

7. Procédé selon une quelconque revendication précédente, dans lequel ladite caisse de chargement (110) est une remorque de camion.
